# FASCICULE DE BREVET EUROPEEN

(11) **EP 1 574 270 B1**
(45) Date de publication et mention de la délivrance du brevet: **03.05.2017**
(21) Numéro de dépôt: 05101710.1
(22) Date de dépôt: 04.03.2005
(51) Int. Cl.: B21D 53/78, F01D 5/28

(54) **PROCÉDÉ DE FABRICATION D'UN BORD D'ATTAQUE OU DE FUITE DE RENFORCEMENT POUR UNE AUBE DE SOUFFLANTE**
VERFAHREN ZUR HERSTELLUNG EINER VERSTÄRKUNGS-ANSTROM ODER HINTERKANTE FÜR EINE GEBLÄSESCHAUFEL
METHOD FOR MAKING A REINFORCED LEADING OR TRAILING EDGE FOR A FAN BLADE

(30) Priorité: 08.03.2004 FR 0450466
(43) Date de publication de la demande: 14.09.2005
(73) Titulaire: SNECMA, 75015 Paris (FR)
(72) Inventeur: Despreaux, Jean-Louis Paul Victor, 75018 Paris (FR); Franchet, Jean-Michel Patrick Maurice, 75018 Paris (FR); Joffroy, Philippe, 95270 Viarmes (FR); Klein, Gilles Charles Casimir, 95540 Mery sur Oise (FR); Leveque, Stéphane André, 91300 Massy (FR); Lhomme, Daniel Gaston, 95550 Bessancourt (FR); Lorieux, Alain, 95110 Sannois (FR)
(74) Mandataire: Ahner, Philippe

(56) Documents cités:
- EP-A- 0 893 342
- EP-A- 1 106 783
- FR-A- 2 739 832
- US-A- 5 694 683
- US-B1- 6 471 485

## Description

### DOMAINE TECHNIQUE ET ETAT DE LA TECHNIQUE

La présente invention concerne un procédé de fabrication d'un bord de renforcement, destinés à renforcer par exemple les aubes de soufflantes de turbomachine à large code.

Les aubes de soufflantes de turbomachine subissent d'importantes contraintes mécaniques, notamment au vu de leur vitesse de rotation, tout en devant satisfaire à des conditions strictes de poids et d'encombrement. L'une des options envisagées pour alléger les aubes est l'utilisation de matériau composite pour leur fabrication. Cependant, les aubes de soufflante de turbomachines doivent également répondre à des critères sévères d'utilisation, notamment résister aux impacts de corps étranger. Or le matériau composite, notamment sur le bord d'aube, peut s'avérer cassant lorsque son épaisseur est minimale.

Pour pallier ce problème, il a été envisagé de consolider le bord d'attaque des aubes de soufflante en matériau composite au moyen d'une pièce métallique s'intégrant au profil aérodynamique de l'aube. Une telle pièce métallique de renforcement, également appelée bord d'attaque, ou bord de fuite, de consolidation, est alors ajoutée, généralement collée, au bord d'attaque et/ou fuite de l'aube en composite sans altérer son profil aérodynamique. Cette pièce métallique est constituée d'une partie massive de plusieurs millimètres prolongée de deux lèvres, intrados et extrados, très fines, de quelques dixièmes de millimètres.

L'invention se propose de réaliser des pièces susceptibles d'être utilisées comme bord d'attaque et/ou de fuite de consolidation pour des aubes.

### EXPOSÉ DE L'INVENTION

Afin de remédier aux problèmes inhérents au développement de techniques d'usinage pour fabriquer un bord de consolidation dont la géométrie est complexe, sous l'un de ses aspects, l'invention concerne un procédé de fabrication d'un bord de renforcement comprenant la réalisation d'une enveloppe creuse suivie d'une découpe de l'enveloppe pour obtenir la pièce désirée. De préférence, la réalisation de l'enveloppe est effectuée par la technique de « soudage par diffusion et formage superplastique », incluant éventuellement un cambrage-vrillage. La découpe est de préférence effectuée par laser ou jet pressurisé. Il peut s'avérer souhaitable de procéder à un usinage du bord ainsi formé.

Sous un autre aspect, l'invention concerne l'utilisation du procédé comme ci-dessus pour la fabrication de pièces ayant la forme de bords de renforcement, et plus particulièrement de bords de fuite et/ou d'attaque de consolidation pour aubes.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs, sur lesquels :
La figure 1a représente une aube de turbomachine, la figure 1b montre un bord d'attaque de renforcement pour une telle aube.
La figure 2 représente schématiquement une vue en perspective de l'enveloppe du bord de la figure 1b, telle que modélisée ou réalisée par SPF/DB.
La figure 3 illustre schématiquement les étapes de la fabrication d'un bord d'attaque de consolidation selon l'invention, la figure 3a représentant les pièces primaires constituant le bord d'attaque, la figure 3b représentant les pièces primaires lors de l'étape d'assemblage suivie du soudage par diffusion, la figure 3c représentant l'enveloppe issue du gonflage et formage superplastique, la figure 3d représentant une section transversale du bord d'attaque après découpe.

### EXPOSÉ DÉTAILLÉ DE MODES DE RÉALISATION PARTICULIERS

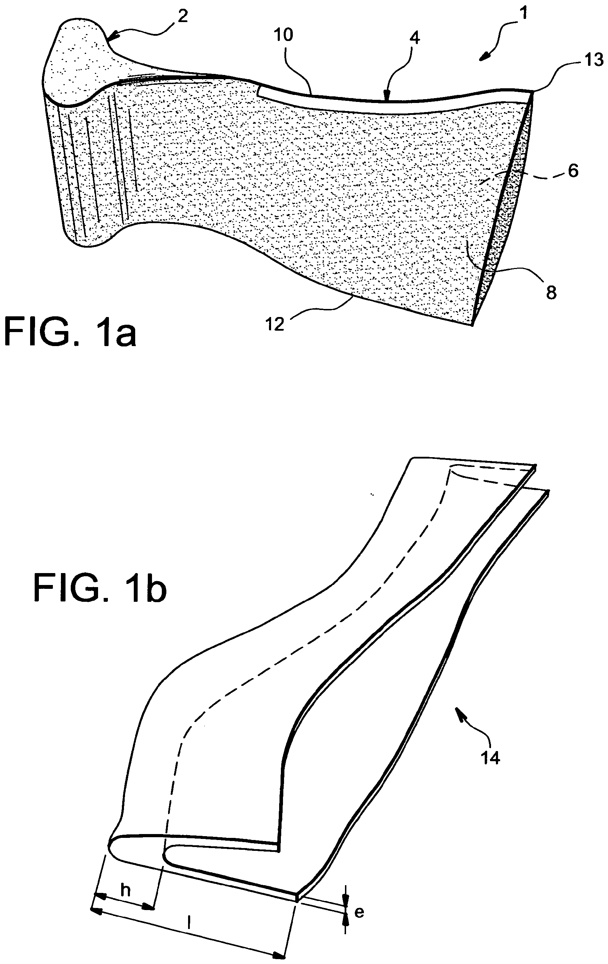

La figure 1a représente une aube 1, du type aube de rotor de soufflante à grande corde. De géométrie complexe, une telle aube comporte un pied 2 prolongé par une pale 4 dans une direction radiale. La pale 4, destinée à être placée dans la veine de circulation d'un flux d'air d'une turbomachine, est munie de deux surfaces extérieures, respectivement appelées surface d'extrados 6 et surface d'intrados 8, raccordées par un bord d'attaque 10 et un bord de fuite 12. Typiquement, la longueur entre bord d'attaque 10 et bord de fuite 12 est de l'ordre de 600 mm. Des renforcements 13 peuvent s'avérer nécessaires sur le bord de fuite 12, et surtout sur le bord d'attaque 10, pour éviter ou simplement retarder leur détérioration, notamment en cas d'impact.

Ces renforcements 13 peuvent être formés directement sur l'aube lors de sa fabrication, par exemple par moulage de métal. Cependant, cette solution n'est pas toujours possible, ni souhaitable, par exemple lorsque deux matériaux différents sont choisis pour l'aube et le renforcement. Notamment, dans le cas des aubes réalisées en matériau composite, un renforcement du bord d'attaque et/ou de fuite en métal, par exemple en alliage de titane, sera fabriqué de manière séparée. Un tel bord de consolidation 14 est alors ajouté sur l'aube 1, épousant le plus possible sa forme, de façon à ne pas altérer les propriétés mécaniques et aérodynamiques.

Au vu de la géométrie de l'aube présentée sur la figure 1a, on déduit rapidement que le profil du bord de renforcement 14 aura lui aussi un dessin complexe. Par ailleurs, l'aérodynamisme devant être conservé et le poids restant un souci constant, les dimensions souhaitées pour le bord de renforcement 14 ajoutent des contraintes supplémentaires. La figure 1b présente une telle géométrie de bord d'attaque et/ou de fuite de consolidation 14 pour aube de soufflante de turbomachine à large code, cette aube étant en matériau composite ou non. Un exemple de dimensions pour un tel bord d'attaque de renforcement 14 est une longueur 1 de recouvrement de l'ordre de 100 à 150 mm, de préférence 130 mm, une hauteur h de la partie massive de renforcement de l'ordre de 50 à 60 mm, et une épaisseur e de paroi des lèvres inférieure à 2 mm, si possible de l'ordre de 0,5 mm, sur la plus grande partie de la longueur (1 - h).

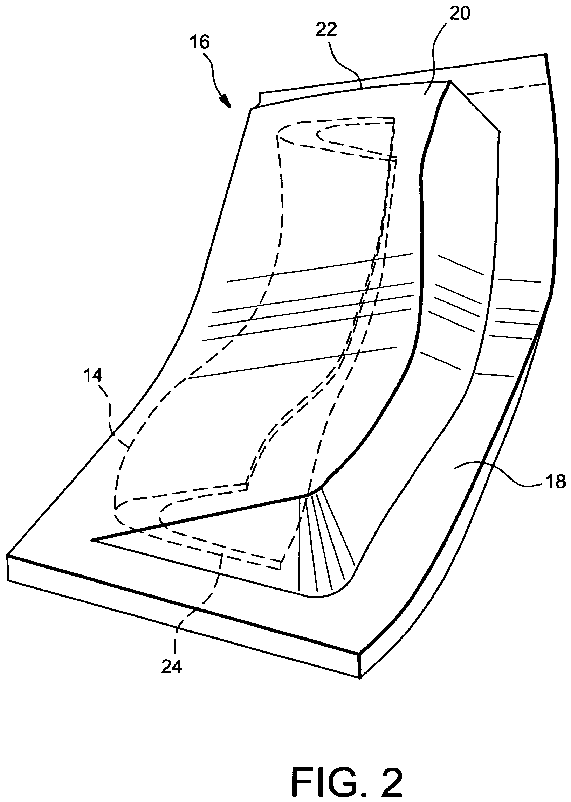

Selon l'invention, pour fabriquer un tel profil complexe, il a été choisi de passer par un produit intermédiaire *a priori* plus complexe encore à réaliser : une enveloppe 16 du bord d'attaque de renforcement 14, de forme générale creuse. En se référant à la figure 2, l'enveloppe 16 comprend un pourtour formé du bord d'attaque 14 et de parties additionnelles 18, ce pourtour définissant une cavité intérieure 20. L'intérêt de définir une telle enveloppe 16 est l'utilisation de procédés de fabrication de pièces creuses, suivie de la découpe de la pièce creuse 16 pour en extraire le bord d'attaque de renforcement 14.

En particulier, on connaît un procédé de fabrication, par exemple du document EP-A-1 338 353, qui permet de fabriquer des géométries creuses complexes : le procédé de « soudage par diffusion et formage superplastique » (SPF/DB, de la dénomination anglo-saxonne « Super Plastic Forming / Diffusion Bonding »), procédé utilisé notamment dans le domaine aéronautique.

La première étape consiste à modéliser le profil du bord d'attaque de consolidation 14, par exemple celui de la figure 1b, pour obtenir une pièce, ou enveloppe, 16 réalisable par SPF/DB, par exemple celle de la figure 2. L'une des possibilités consiste à utiliser la modélisation ou la conception assistée par ordinateur (CAO), par exemple en procédant virtuellement à un découpage du bord d'attaque 14 en sections transversales normales à un axe longitudinal fictif défini à l'étude. Ces sections sont alors modifiées afin d'obtenir des sections internes fermées puis combinées pour obtenir une enveloppe creuse 16. Il est clair que d'autres techniques connues de l'homme du métier peuvent être utilisées.

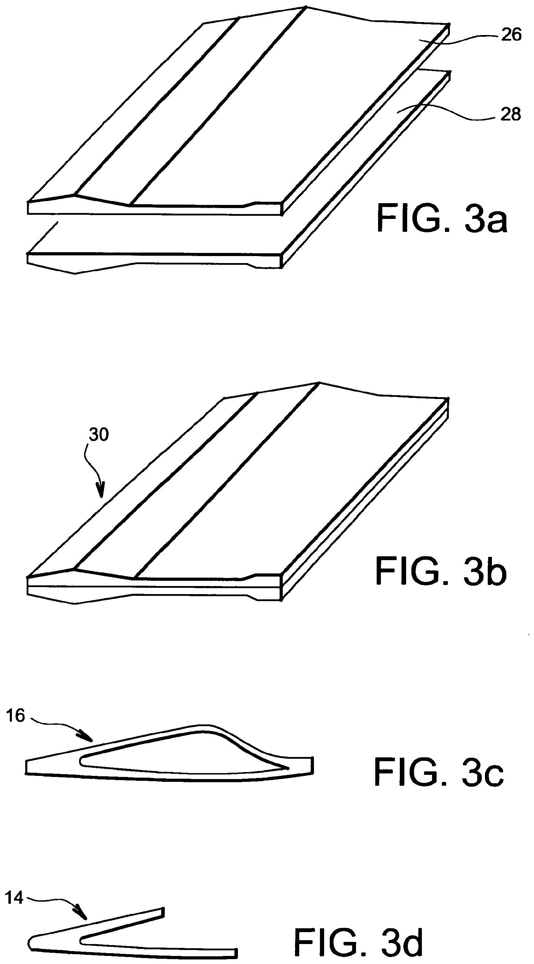

Une opération dite « de mise à plat » consiste ensuite à plaquer sur un même plan les parois intrados 22 et extrados 24 de cette enveloppe 16 fermée du bord d'attaque 14. Cette opération de mise à plat peut s'effectuer par simulation également, en utilisant des moyens de CAO, par exemple en trois phases, un dégonflage suivi d'un dévrillage et d'un « décambrage » puis de la mise à plat proprement dit. De cette mise à plat est déduit le dessin des pièces primaires 26, 28, de façon usuelle au nombre de deux pour ce genre de profil, schématisées en figure 3a.

Les pièces primaires 26, 28 constitutives d'un bord sont ensuite usinées, habituellement à partir d'une tôle laminée ou forgée. L'épaisseur de la tôle peut correspondre à la demi épaisseur maximale du bord d'attaque ou de fuite de consolidation que l'on désire fabriquer ; de façon préférée, la tôle est en alliage de titane, par exemple TiAlV, mais tout métal ou alliage dont les propriétés correspondent à l'usage souhaité et susceptible d'être utilisé en suivant la technique SPF/DB peut être choisi. On peut également utiliser des tôles différentes pour l'intrados 22 et l'extrados 24, voire des tôles d'épaisseurs variables, dont la somme des épaisseurs est au moins égale ou supérieure à l'épaisseur maximale du bord d'attaque de renforcement 14. L'usinage consiste à répartir les épaisseurs de chaque pièce primaire 26, 28 constituant le bord d'attaque ou de fuite de renforcement suivant la définition fournie par la CAO. Des outils tels que la CFAO (conception fabrication assistées par ordinateur) peuvent être employés, et toute technique connue de l'homme du métier peut être utilisée.

Avec les pièces primaires 26, 28 ainsi usinées, on procède ensuite au soudage par diffusion afin de former la préforme 30 : figure 3b. Par exemple, on procède à un nettoyage « parfait » des pièces primaires 26, 28 ; on applique ensuite un produit anti-diffusant sur une face interne des pièces primaires au moins, suivant un motif prédéfini, par exemple par un procédé de sérigraphie. Ce produit anti-diffusant est cuit, et les pièces primaires 26, 28 sont assemblées en une préforme 30.

A titre d'exemple, pour un bord d'attaque de consolidation 14 en alliage de titane pour une aube 1 de soufflante de turbomachine à large corde en matériau composite, on peut choisir les paramètres suivants pour le soudage par diffusion : température de 875°C à 940°C sous une pression de 3 à 6 MPa pendant 1 heure au moins. Le soudage par diffusion peut être réalisé par une pression mécanique ou isostatique sur une presse équipée d'outillage adéquat ; il est de préférence réalisé dans une enceinte pour traitement thermomécanique sous pression isostatique à l'aide d'un gaz inerte du type argon, dite enceinte HIP (« Hot Isostatic Pressure »). Cette opération a pour but de souder par diffusion les parties internes métalliques non revêtues de produit diffusant entre elles.

De manière avantageuse, l'opération de soudage par diffusion peut être combinée à une mise en forme dans le cas d'un soudage sur presse. Cette mise en forme aura pour but de mieux positionner la préforme soudée sur le moule de gonflage de l'opération de gonflage et formage superplastique.

Suite au soudage par diffusion, on peut procéder à une étape de cambrage et vrillage de la préforme 30. Cette étape peut également être combinée avec le soudage par diffusion.

La préforme 30 issue du soudage par diffusion est enfin placée dans un appareillage de gonflage afin de subir un formage superplastique. Par exemple, on peut la réaliser entre 850°C et 940°C sous pression de 2 à 6 MPa d'argon. Cette étape peut par ailleurs être combinée avec le soudage par diffusion, éventuellement couplé au cambrage-vrillage. La pièce issue de ce processus correspond à l'enveloppe 16 du bord d'attaque de renforcement 14, illustrée schématiquement sur la figure 3c, et représentée également en figure 2.

On note que les étapes sont semblables jusqu'ici à la formation d'une aube creuse de soufflante par SPF/DB, dont un exemple d'utilisation est décrit par exemple dans le document FR-A-2 834 481 : le procédé selon l'invention permet en effet d'utiliser l'outillage et le savoir-faire connus, ce qui permet d'alléger les coûts de fabrication de ces parties sensibles des aubes.

On procède enfin à la découpe de l'enveloppe 16 afin de parvenir à un bord d'attaque de renforcement 14 lui-même, tel que schématisé sur la figure 3d. La découpe peut être effectuée par toute technique connue de l'homme du métier ; découpes au laser ou par jet d'eau pressurisée sont préconisées.

Il peut s'avérer utile ensuite de procéder à un usinage de finition, notamment un polissage du bord 14 résultant. Par ailleurs, afin d'optimiser la complémentarité entre bord d'attaque de renforcement 14 et bord d'attaque de l'aube 10, un ajustement des côtes peut s'avérer préférable. De manière générale, une fois réalisé, le bord d'attaque de consolidation 14 peut être usiné selon toutes les techniques connues de l'homme du métier, et notamment un usinage chimique et/ou mécanique peut être envisagé pour amincir les intrados et extrados.

## Revendications

1. Procédé de fabrication d'un bord de renforcement (14) pour une aube (1) de soufflante de turbomachine comprenant les étapes de :
- réalisation d'une enveloppe (16) comprenant une cavité (20) délimitée par un pourtour, le pourtour incluant le bord de renforcement (14) ;
- découpe de l'enveloppe (16) pour en extraire le bord de renforcement (14).

2. Procédé selon la revendication 1, dans lequel la réalisation de l'enveloppe (16) comprend les étapes de :
- réalisation de pièces primaires (26, 28) ;
- soudage par diffusion des pièces primaires (26, 28) en une préforme (30) ;
- gonflage sous pression gazeuse de la préforme (30) et formage superplastique de l'enveloppe (16).

3. Procédé selon la revendication 2, comprenant en outre une étape de cambrage et vrillage de la préforme (30), après l'opération de soudage par diffusion.

4. Procédé selon la revendication 2, comprenant un cambrage et un vrillage combinés avec le soudage par diffusion en une seule opération.

5. Procédé selon la revendication 4, dans lequel le soudage par diffusion, le cambrage et le vrillage sont combinés avec le gonflage et le formage superplastique en une même opération.

6. Procédé selon l'une des revendications précédentes, dans lequel la découpe est effectuée par laser et/ou jet pressurisé.

7. Procédé selon l'une des revendications précédentes, comprenant en outre une étape d'usinage du bord de renforcement (14) résultant de la découpe de l'enveloppe (16).

8. Utilisation d'un procédé selon l'une des revendications 2 à 7 pour fabriquer un bord d'attaque et/ou de fuite de renforcement (14) destiné à renforcer une aube (1) de soufflante de turbomachine composé d'une partie massive prolongée de deux lèvres.

## Patentansprüche

1. Verfahren zur Herstellung einer Verstärkungskante (14) für eine Gebläseschaufel (1) von Turbotriebwerken, welches die folgenden Verfahrensschritte umfasst:
- Fertigung einer Hülle (16), die einen Hohlraum (20) enthält, der von einem Außenmantel umgrenzt wird, wobei der Außenmantel die Verstärkungskante (14) beinhaltet;
- Schneiden der Hülle (16), um daraus die Verstärkungskante (14) zu gewinnen.

2. Verfahren nach Anspruch 1, wobei die Fertigung der Hülle (16) die folgenden Arbeitsschritte umfasst:
- Fertigung von Primärwerkstücken (26, 28);
- Diffusionsverschweißen der Primärwerkstücke (26, 28) zu einer Vorform (30);
- Aufblasen der Vorform (30) unter Gasdruck und superplastisches Formen der Hülle (16).

3. Verfahren nach Anspruch 2, das ferner einen Verfahrensschritt des zweiachsigen Biegens und Verwindens der Vorform (30) nach dem Schritt des Diffusionsverschweißens umfasst.

4. Verfahren nach Anspruch 2, das ein zweiachsiges Biegen und ein Verwinden in Kombination mit dem Diffusionsverschweißen in einem einzigen Arbeitsschritt enthält.

5. Verfahren nach Anspruch 4, wobei das Diffusionsverschweißen, das zweiachsige Biegen und das Verwinden mit dem Aufblasen und dem superplastischen Formen in einem einzigen Arbeitsschritt kombiniert werden.

6. Verfahren nach einem der vorherigen Ansprüche, wobei das Schneiden mit Laser und/oder Druckstrahl erfolgt.

7. Verfahren nach einem der vorherigen Ansprüche, das ferner einen Arbeitsschritt der Bearbeitung der sich aus dem Schneiden der Hülle (16) ergebenden Verstärkungskante (14) enthält.

8. Anwendung eines Verfahrens nach einem der Ansprüche 2 bis 7 zur Herstellung einer Verstärkungsvorderkante und/oder -hinterkante (14), die dazu bestimmt ist, eine Turbotriebwerk-Gebläseschaufel (1) zu verstärken, und die aus einem massiven Teil, verlängert durch zwei Schenkel besteht.

## Claims

1. Process for manufacturing a leading edge (14) for a turbomachine fan blade (1) comprising the following steps:
- manufacturing an envelope (16) comprising a cavity (20) delimited by a periphery, the periphery including the reinforcing edge (14);
- cutting out the envelope (16) to extract the reinforcing leading edge (14).

2. Process according to claim 1, in which the manufacture of the envelope (16) includes the following steps:
- making primary parts (26, 28);
- diffusion bonding of the primary parts (26, 28) into a preform (30);
- inflating the preform (30) under gas pressure and super plastic forming of the envelope (16).

3. Process according to claim 2, also including a step for bending and twisting the preform (30), after diffusion bonding.

4. Process according to claim 2, including bending and twisting combined with diffusion bonding in a single operation.

5. Process according to claim 4, in which diffusion bonding, bending and twisting are combined with inflation and super plastic forming into a single operation.

6. Process according to one of the above claims, in which laser cutting and/or high pressure waterjet cutting are used.

7. Process according to one of the above claims, also comprising a step for machining the reinforcing edge (14) resulting from cutting out the envelope (16).

8. Use of process according to any one of claims 2 to 7 to manufacture a reinforcing leading and/or trailing edge (14) so as to reinforce a turbomachine fan blade (1), consisting of a solid part extended by two lips.
